# EUROPEAN PATENT SPECIFICATION

(11) **EP 4 417 557 B1**
(45) Date of publication and mention of the grant of the patent: **27.05.2026**
(21) Application number: 23824213.5
(22) Date of filing: 14.06.2023
(51) Int. Cl.: B65H 19/12, B65H 19/18, H01M 10/04, H01M 50/105

(54) **POUCH ROLL REPLACEMENT SYSTEM**
BEUTELROLLENAUSTAUSCHSYSTEM
SYSTÈME DE REMPLACEMENT DE ROULEAU DE POCHES

(30) Priority: 14.06.2022 KR 20220072001
(43) Date of publication of application: 21.08.2024
(73) Proprietor: LG Energy Solution, Ltd., Seoul 07335 (KR)
(72) Inventor: LEE, Seung Bae, Daejeon 34122 (KR); OH, Duk Keun, Daejeon 34122 (KR); LEE, Jin Soo, Daejeon 34122 (KR); BAEK, Ju Hwan, Daejeon 34122 (KR); HONG, Seok In, Daejeon 34122 (KR)
(74) Representative: Goddar, Heinz J.
(86) International application number: PCT/KR2023/008156
(87) International publication number: WO 2023/243999

(56) References cited:
- EP-A1- 1 647 508
- JP-A- 2011 079 602
- KR-A- 20160 133 264
- KR-A- 20200 066 018
- KR-A- 20210 029 448
- KR-A- 20220 071 348
- US-A- 5 192 033

## Description

### Technical Field

The present invention relates to a pouch roll replacement system and a pouch roll position correction method using the same, and specifically, relates to a pouch roll replacement system capable of matching a central axis height of a replacement pouch roll before transport to chucking heights of a replacement chucking part and an unwinder chucking part, and a pouch roll position correction method thereof.

This application claims the benefit of priority based on Korean Patent Application No. 10-2022-0072001 dated June 14, 2022.

### Background Art

Lithium secondary batteries, which can be charged and discharged, are also used as an energy source for electric vehicles, hybrid electric vehicles, and the like, which are presented as an alternative to existing gasoline and diesel vehicles that cause air pollution.

In the lithium secondary batteries, a positive electrode and a negative electrode are laminated with a separator interposed therebetween, where charging and discharging can be repeatedly performed while lithium ions move between the positive electrode and the negative electrode.

In the case of a pouch-type secondary battery, after manufacturing an electrode assembly in which positive electrodes, separators, and negative electrodes are cross-laminated, the electrode assembly is accommodated in a pouch. That is, the pouch is used as a case that forms the exterior of the secondary battery.

In a secondary battery manufacturing process, the pouch is supplied in a roll-to-roll manner. However, when the entire pouch roll wound in the form of a roll is used up, a worker stops the equipment, connects the end of the pouch wound around the pouch roll during use to the end of the pouch wound around a new pouch roll with a tape, and then restarts the equipment.

While the pouch roll is chucked to an unwinder, and the pouch wound around the pouch roll is unwound by the unwinder, the pouch is supplied to the battery manufacturing process.

Meanwhile, when the roll diameter of the replacement pouch roll supplied to the unwinder varies, the chucking height of the pouch roll may vary, where conventionally, a worker has manually adjusted the standby height of the replacement pouch roll up to the chucking height.

In general, pouch rolls are difficult to transport as they weigh approximately 200 kg or more, and there is a risk that safety accidents occur when the pouch roll falls.

In addition, conventionally, upon pouch roll replacement, the equipment had to be shut down, and there was a problem that the workload of the worker was caused due to frequent replacement. Document US 5,192,033 A discloses a roll replacement system comprising: a transport part transporting a replacement roll and capable of adjusting the central axis height of the replacement roll; a replacement chucking part provided to chuck the replacement roll transported through the transport part and having a predetermined chucking height; an unwinder chucking part with a traveling (i.e. unwinding) roll installed; and a measuring part.

### Disclosure

### Technical Problem

The present invention is intended to provide a pouch roll replacement system capable of adjusting a chucking height of a replacement pouch roll according to the diameter of the replacement pouch roll, and a pouch roll position correction method using the same.

In addition, the present invention is intended to provide a pouch roll replacement system capable of adjusting a central axis height of a replacement pouch roll before transport to chucking heights of a replacement chucking part and an unwinder chucking part, even if the roll diameter is different for each replacement pouch roll, and a pouch roll position correction method using the same.

### Technical Solution

In order to solve the above problem, a pouch roll replacement system according to one example of the present invention comprises a transport part transporting a replacement pouch roll and capable of adjusting the central axis height of the replacement pouch roll, a replacement chucking part provided to chuck the replacement pouch roll transported through the transport part and having a predetermined chucking height, an unwinder chucking part with a traveling pouch roll installed, a measuring part measuring the distance to the replacement pouch roll seated on the transport part before transporting the replacement pouch roll to the replacement chucking part, and a control part controlling the transport part so that the central axis height of the replacement pouch roll seated on the transport part is adjusted based on the measurement information of the measuring part and the chucking height of the replacement chucking part.

Also, the control part may be provided to control the operation of the transport part so that the replacement pouch roll is transported to the replacement chucking part after adjusting the central axis height of the replacement pouch roll seated on the transport part.

In addition, the control part may be provided so that it calculates the diameter of the replacement pouch roll based on the measurement information, and calculates the difference between the chucking height of the replacement chucking part and the center axis height of the replacement pouch roll seated on the transport part based on the diameter of the replacement pouch roll.

Furthermore, the control part may calculate the difference between the chucking height of the replacement chucking part and the central axis height of the replacement pouch roll seated on the transport part as a height correction value, and may control the transport part so that the central axis height of the replacement pouch roll seated on the transport part is adjusted by the height correction value.

Also, the control part may adjust the central axis height of the replacement pouch roll seated on the transport part so that the central axis height of the replacement pouch roll seated on the transport part matches the chucking height of the replacement chucking part.

In addition, the unwinder chucking part may have the same chucking height as that of the replacement chucking part, and the transport part may be provided to transport the replacement pouch roll from the replacement chucking part to the unwinder chucking part.

Furthermore, the transport part may comprise a transport rail extending to guide the transport of the replacement pouch roll through the replacement chucking part to the unwinder chucking part, a shuttle including a seating member, on which the replacement pouch roll is seated, and provided to be movable along the transport rail, and a height adjustment unit adjusting the height of the seating member.

Also, the shuttle may be provided to be capable of reciprocating along the transport rail. In addition, the shuttle may be provided so that when the traveling pouch roll is replaced with the replacement pouch roll, it is moved to the unwinder chucking part, and after the replacement pouch roll is chucked to the unwinder chucking part, it moves from the unwinder chucking part to the measuring part.

Furthermore, the seating member may be curved to a predetermined curvature.

Also, the measuring part may comprise a distance sensor measuring the distance from the replacement pouch roll seated on the transport part.

In addition, the distance sensor may be an ultrasonic sensor.

Furthermore, the pouch roll replacement system may further comprise a pouch connection part gripping the end of the pouch wound around the replacement pouch roll chucked to the replacement chucking part, and then transferring the end of the pouch toward the unwinder chucking part.

Also, the pouch connection part may comprise a guide bar extending from the upper part of the replacement chucking part to the upper part of the unwinder chucking part, and a gripper installed to be movable along the guide bar and holding the end of the pouch wound around the replacement pouch roll to move from the replacement chucking part toward the unwinder chucking part.

In addition, when the end of the pouch is gripped through the pouch connection part, the control part may chuck-release the replacement pouch roll from the replacement chucking part, and then transport the replacement pouch roll to the unwinder chucking part through the transport part.

Furthermore, the pouch roll replacement system may further comprise a roll core recovery part recovering the roll core of the traveling pouch roll chuck-released from the unwinder chucking part.

### Advantageous Effects

As discussed above, the pouch roll replacement system according to one example of the present invention, and the pouch roll position correction method using the same have the following effects.

By measuring the roll diameter of the replacement pouch roll seated on the transport part, it is possible to adjust the central axis height of the replacement pouch roll seated on the transport part to the chucking heights of the replacement chucking part and the unwinder chucking part before transporting the replacement pouch to the replacement chucking part.

Also, it is possible to automatically correct the position (height) of the replacement pouch roll seated on the transport part so that the central axis height of the replacement pouch roll matches the chucking height of the traveling pouch roll.

In addition, even if the roll diameter is different for each replacement pouch roll, the roll diameter is measured for each replacement pouch roll seated on the transport part, and thus, the height of the replacement pouch roll is automatically corrected so that the central axis height of the replacement pouch roll matches the central axis height of the traveling pouch roll, whereby it is possible to automatically supply the replacement pouch roll to the replacement chucking part and the unwinder chucking part.

### Description of Drawings

Figure 1 schematically illustrates a side arrangement diagram of a pouch roll replacement system according to one example of the present invention.
Figure 2 schematically illustrates a plan arrangement diagram of a pouch roll replacement system according to one example of the present invention.
Figure 3 schematically illustrates a configuration diagram of a pouch roll replacement system according to one example of the present invention.
Figure 4 is a diagram for explaining a process for correcting a height of a replacement pouch roll in one example of the present invention.
Figures 5 to 8 are diagrams for explaining operating states of a transport part in a pouch roll replacement system according to one example of the present invention.

### Mode for Invention

Hereinafter, a pouch roll replacement system according to one example of the present invention, and a pouch roll position correction method using the same will be described in detail with reference to the drawings.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

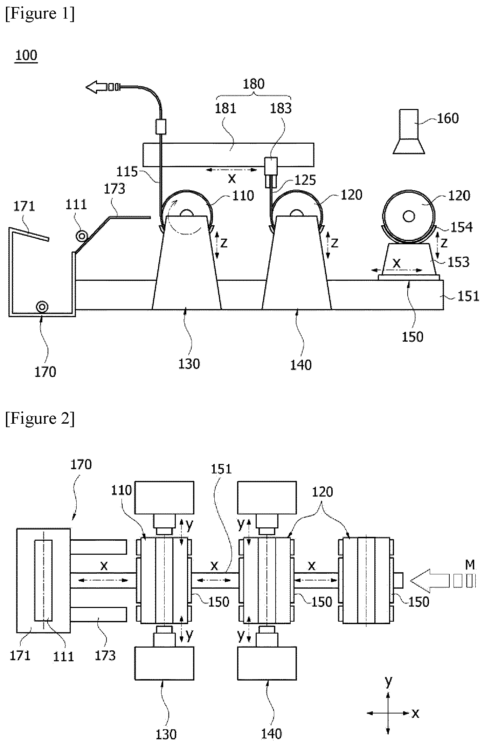

Figure 1 schematically illustrates a side arrangement diagram of a pouch roll replacement system according to one example of the present invention, and Figure 2 schematically illustrates a plan arrangement diagram of a pouch roll replacement system according to one example of the present invention.

The pouch roll replacement system (100) related to one example of the present invention comprises an unwinder chucking part (130), a replacement chucking part (140), a transport part (150), a measuring part (160), and a control part (190).

Referring to Figures 1 and 2, the transport part (150) is provided to transport a replacement pouch roll (120) along a transport direction (M, x-axis direction in Figure 1). The transport part (150) transports the replacement pouch roll (120) to the replacement chucking part (140). In addition, when chucking and chuck-release are performed in the replacement chucking part (140), the transport part (150) transports the chuck-released replacement pouch roll (120) to the unwinder chucking part (130).

Referring to Figure 2, the y-axis direction represents the chucking and chuck-release direction performed in the chucking parts (130, 140), and the y-axis direction may be orthogonal to the transport direction (M).

The unwinder chucking part (130) chucks a traveling pouch roll and a replacement pouch roll and unwinds the pouch wound around the chucked pouch roll, thereby performing a function of supplying pouches to the battery manufacturing process.

In this document, the 'traveling pouch roll (110)' means a pouch roll chucked to the unwinder chucking part (130) to supply a pouch (115) to the battery manufacturing process. In addition, the 'replacement pouch roll (120)' means a pouch roll newly chucked to the unwinder chucking part (130) when the use of the traveling pouch roll (110) chucked to the unwinder chucking part (130) is completed.

Also, the traveling pouch roll (110) and the replacement pouch roll (120) comprise roll cores and pouches (115, 125) wound around the roll cores, respectively, where each pouch roll (110, 120) may have a cylindrical shape. At this instance, the roll core has a central axis, and the central axes of the traveling and replacement pouch rolls (110, 120) are chucked to the respective chucking parts (130, 140). At this time, each chucking part (130, 140) has a predetermined chucking height, where the chucking height may be a height (z-axis direction in Figure 1) based on the bottom surface of the installation space on which the chucking part is installed.

In addition, the unwinder chucking part (130) chucks the replacement pouch roll (120) seated on the transport part (150), and upon chucking, the central axis height of the replacement pouch roll (120) seated on the transport part (150) must be the same as the chucking height of the unwinder chucking part (130). At this time, the central axis height of the replacement pouch roll (120) may be a height (z-axis direction in Figure 1) based on the bottom surface of the installation space where the transport part (150) is installed.

If the roll diameter is different for each newly supplied replacement pouch roll (120), the central axis height of the replacement pouch roll (120) seated on the transport part (150) varies. At this instance, since the unwinder chucking part (130) has a fixed chucking height, the central axis height of the replacement pouch roll (120) must be adjusted to be the same as the chucking height of the unwinder chucking part (130) before being chucked.

In addition, before the replacement pouch roll (120) is transported to the unwinder chucking part (130), the replacement chucking part (140) is provided to chuck the replacement pouch roll (120). At this time, the replacement chucking part (140) has a predetermined chucking height, where the chucking height may be a height based on the bottom surface of the installation space on which the chucking part (140) is installed.

The replacement chucking part (140) chucks the replacement pouch roll (120) seated on the transport part (150), and upon chucking, the central axis height of the replacement pouch roll (120) seated on the transport part (150) must be the same as the chucking height of the replacement chucking part (140). As described above, the central axis height of the replacement pouch roll (120) may be a height based on the bottom surface of the installation space where the transport part (150) is installed.

If the roll diameter is different for each replacement pouch roll (120) newly supplied in the battery manufacturing process, the central axis height of the replacement pouch roll (120) seated on the transport part (150) varies. At this time, since the replacement chucking part (140) has a fixed chucking height, the central axis height of the replacement pouch roll (120) must be adjusted to be the same as the chucking height of the replacement chucking part (140) before being chucking.

Referring to Figure 1, when a replacement pouch (120) is chucked to the replacement chucking part (140), the work of connecting the end of the pouch (125) wound around the replacement pouch roll (120) and the end of the pouch (115) being supplied to the battery manufacturing process is performed.

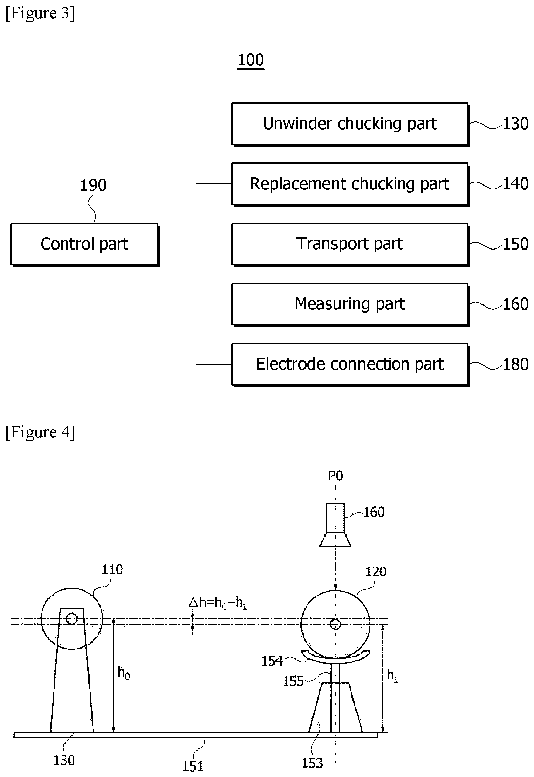

Figure 3 schematically illustrates a configuration diagram of a pouch roll replacement system according to one example of the present invention, and Figure 4 is a diagram for explaining a process for correcting a height of a replacement pouch roll in one example of the present invention.

The pouch roll replacement system (100) related to one example of the present invention may automatically correct the height (h1) of the replacement pouch roll (120) so that the central axis height of the replacement pouch roll (120) matches the chucking height of the replacement chucking part (140) and the central axis height of the traveling pouch roll (110) chucked to the unwinder chucking part (130).

Also, in this document, the chucking height of the replacement chucking part (140) may be provided to be the same as the chucking height (h0) of the unwinder chucking part (130). That is, the unwinder chucking part (130) may have the same chucking height as that of the replacement chucking part (140), and the transport part (150) may be provided to transport the replacement pouch roll (120) from the replacement chucking part (140) to the unwinder chucking part (130).

In addition, in this document, the traveling pouch roll (110) and the replacement pouch roll (120) may be aluminum (AL) pouch rolls used in a packaging (PKG) process.

The pouch roll replacement system (100) according to one example of the present invention comprises a transport part (150) transporting a replacement pouch roll (120) and capable of adjusting the central axis height (h1) of the replacement pouch roll (120), and a replacement chucking part (140) provided to chuck the replacement pouch roll (120) transported through the transport part (150) and having a predetermined chucking height.

Also, the pouch roll replacement system (100) comprises an unwinder chucking part (130) with a traveling pouch roll (110) installed, a measuring part (160) measuring the distance to the replacement pouch roll (120) seated on the transport part (150) before transporting the replacement pouch roll (120) to the replacement chucking part (140), and a control part (190) controlling the transport part (150) so that the central axis height (h1) of the replacement pouch roll (120) seated on the transport part (150) is adjusted based on the measurement information of the measuring part (160) and the chucking height of the replacement chucking part (140).

**In** addition, the pouch roll replacement system (100) may further comprise a pouch connection part (180) gripping the end of the pouch wound around the replacement pouch roll (120) chucked to the replacement chucking part (140), and then transferring the end of the pouch toward the unwinder chucking part (130).

Furthermore, when the end of the pouch is gripped through the pouch connection part (180), the control part (190) may chuck-release the replacement pouch roll (120) from the replacement chucking part (140), and then transport the replacement pouch (120) to the unwinder chucking part (130) through the transport part (150).

Also, the pouch roll replacement system (100) may further comprise a roll core recovery part (170) recovering the roll core of the traveling pouch roll (110) chuck-released from the unwinder chucking part (130).

The control part (190) controls the operation of the unwinder chucking part (130), the replacement chucking part (140), the measuring part (160), and the pouch connection part (180).

Also, the control part (190) may control the operation of the transport part (150) so that the central axis height of the replacement pouch roll (120) seated on the transport part (150) is adjusted, and then the replacement pouch roll (120) is transported to the replacement chucking part (140).

**In** addition, the control part (190) may be provided so that it calculates the diameter of the replacement pouch roll (120) based on the measurement information of the measuring part, and, calculates the difference between the chucking height of the replacement chucking part (140) and the central axis height of the replacement pouch roll (120) seated on the transport part (150) based on the diameter of the replacement pouch roll (120).

Furthermore, the control part (190) may calculate the difference between the chucking height of the replacement chucking part (140) and the central axis height of the replacement pouch roll seated on the transport part (150) as a height correction value, and may control the transport part (150) so that the central axis height of the replacement pouch roll (120) seated on the transport part (150) is adjusted by the height correction value.

Also, the control part (190) may adjust the central axis height of the replacement pouch roll (120) seated on the transport part so that the central axis height of the replacement pouch roll (120) seated on the transport part (150) matches the chucking height of the replacement chucking part.

**In** addition, the measuring part (160) may comprise a distance sensor measuring the distance from the replacement pouch roll (120) seated on the transport part (150), and the distance sensor may be an ultrasonic sensor.

Referring to Figure 4, the measuring part (160) may be provided to measure the distance from the replacement pouch roll (120) seated on the transport part (150) before the replacement pouch roll (120) is transported to the replacement chucking part (140).

Also, the measuring part (160) is provided to measure the distance from the replacement pouch roll (120) at the reference position of the transport part (150) (also referred to as the 'transport standby position'). At this time, distance information according to the diameter of the replacement pouch roll (120) may be stored in advance in the control part (190), and as the measuring part (160) measures the distance from the replacement pouch roll (120), and the control part (190) compares the measured distance with the pre-stored distance information, it is possible to calculate the diameter of the replacement pouch roll (120).

**In** addition, the control part (190) may calculate the central axis height (h1) of the replacement pouch roll (120) seated on the transport part (150) based on the height information of the transport part (150) and the diameter information of the replacement pouch roll (120) at the reference position.

Furthermore, in the control part (190), the chucking heights of the replacement chucking part (140) and the unwinder chucking part (130) are each stored, and the control part (190) adjusts the central axis height of the replacement pouch roll (120) seated on the transport part (150) so that the central axis height of the replacement pouch roll (120) seated on the transport part (150) matches the chucking height of the replacement chucking part.

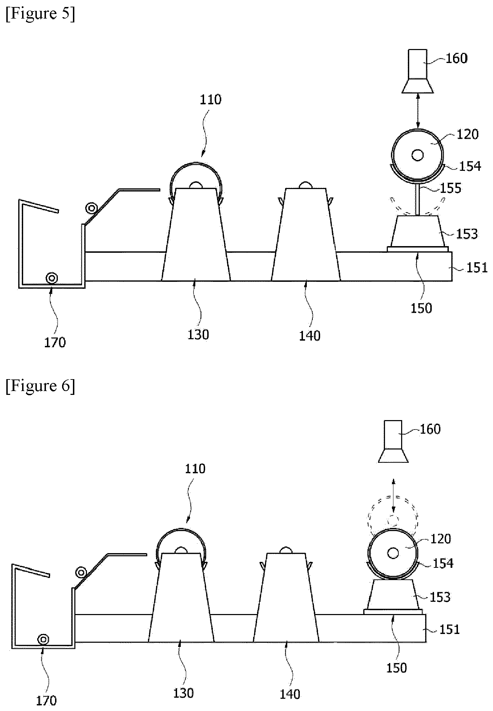

Figures 5 to 7 are diagrams for explaining operating states of a transport part (150) in a pouch roll replacement system according to one example of the present invention.

The pouch roll replacement system (100) according to one example of the present invention comprises an unwinder chucking part (130), a replacement chucking part (140), a transport part (150), a measuring part (160), and a roll core recovery part (170), a pouch connection part (180), and a control part (190).

The unwinder chucking part (130) is provided in an unwinder of a secondary battery manufacturing process. The traveling pouch roll (110) is rotatably installed in the unwinder chucking part (130) so that the pouch (115) wound around the traveling pouch roll (110) can be unwound.

Also, the replacement chucking part (140) is a device in which the replacement pouch roll (120) is chucked. In this example, the replacement pouch roll (120) is sequentially transported to the replacement chucking part (140) and the unwinder chucking part (130) through the transport part (150).

In addition, the replacement chucking part (140) may have the same chucking height as the chucking height of the unwinder chucking part (130) in the transport path (M, x-axis direction) of the transport part (150), and may be disposed in line with the unwinder chucking part (130).

The transport part (150) sequentially transports the replacement pouch roll (120) to the replacement chucking part (140) and the unwinder chucking part (130). The transport part (150) comprises a transport rail (151), a shuttle (153), and a height adjustment unit (155).

Specifically, the transport part (150) may comprise a transport rail (151) extending to guide the transport of the replacement pouch roll (120) through the replacement chucking part (140) to the unwinder chucking part (130), a shuttle (153) including a seating member (154), on which the replacement pouch roll (120) is seated, and provided to be movable along the transport rail (151), and a height adjustment unit (155) adjusting the height of the seating member (154).

In addition, the transport rail (151) forms a transport path (x-axis direction) that guides transport of the replacement pouch roll (120) to the unwinder chucking part (130). The shuttle (153) is installed on the transport rail (151) to be capable of reciprocating.

The shuttle (153) is installed to be capable of reciprocating along the transport rail (151) back and forth. When the traveling pouch roll (110) is replaced with the replacement pouch roll (120), the shuttle (153) is moved at the transport standby position (P0) of the transport part (150) to the unwinder chucking part (130).

Then, when the replacement pouch roll (120) is chucked to the unwinder chucking part (130), the shuttle (153) is operated to return to the transport standby position (P0) from the unwinder chucking part (130).

The shuttle (153) is provided with the seating member (154). The replacement pouch roll (120) is seated on the seating member (154). The seating member (154) may have a shape curved with a predetermined curvature in order to stably support the replacement pouch roll (120), and for example, the seating member (154) may have an arc-shaped cross section.

In addition, the height adjustment unit (155) is coupled to the seating member (154). The height adjustment unit (155) is installed on the shuttle (153) to perform a function of adjusting the height of the seating member (154). The height adjustment unit (155) may comprise a servo motor.

The operation of the height adjustment unit (155) is controlled by the control part (190). The height adjustment unit (155) may adjust the central axis height of the replacement pouch roll (120) along the height direction (z-axis direction shown in Figure 1) by the height correction value (Δh) calculated by the control part (190).

In addition, the measuring part (160) measures the distance to the replacement pouch roll (120) at the transport standby position (P0). The measuring part (160) comprises a distance sensor measuring the vertical distance from the replacement pouch roll (120) seated on the transport part (150) at the transport standby position (P0). An ultrasonic sensor may be used as the distance sensor.

In this example, the transport standby position (P0) is a position where the transport part (150) is during standby in a state where the measuring part (160) is installed and the replacement pouch roll (120) is seated, which may be a fixed position.

Also, at the transport standby position (P0), the transport part (150) may be located at the bottom of the measuring part (160).

In addition, the control part (190) may control the operation of the transport part (150) so that the central axis height of the replacement pouch roll (120) matches the central axis height of the traveling pouch roll (110) chucked on the unwinder chucking part (130) based on the measurement information of the measuring part (160).

As described above, the central axis height (also referred to as the 'chucking height') of the traveling pouch roll (110) may be preset in the control part (190) as the reference height (h₀). The control part (190) may receive the measured distance information to calculate the diameter of the replacement pouch roll (120), which calculates the central axis height (h₁) of the replacement pouch roll (120) based on the diameter information of the replacement pouch roll (120).

Referring to Figure 4, the control part (190) may calculate a height correction value (Δh) which is the difference between the chucking height (h₀) and the central axis height (h₁) of the replacement pouch roll (120). Then, the control part (190) controls the operation of the transport part (150) so that the central axis height of the replacement pouch roll (120) is corrected by the height correction value (Δh).

In addition, the pouch connection part (180) may comprise a guide bar (181) extending from the upper part of the replacement chucking part (140) to the upper part of the unwinder chucking part (130), and a gripper (183) installed to be movable along the guide bar (181) and holding the end of the pouch (125) wound around the replacement pouch roll (120) to move from the replacement chucking part (140) toward the unwinder chucking part (130).

The guide bar (181) is installed parallel to the transport path (M) of the transport part (150) at the upper part of the unwinder chucking part (130) and the replacement chucking part (140). The gripper (183) is installed on the guide bar (181) to be capable of reciprocating back and forth.

The gripper (183) holds the end of the pouch (125) wound around the replacement pouch roll (120) to move forward from the replacement chucking part (140) toward the unwinder chucking part (130).

In addition, the roll core recovery part (170) is installed adjacent to the unwinder chucking part (130) in the transport path of the transport part (150). The roll core recovery part (170) recovers the roll core (111) of the traveling pouch roll (110) chuck-released from the chucking in the unwinder chucking part (130).

The roll core recovery part (170) may comprise a roll core guide member (171) and a roll core recovery container (173). The roll core guide member (171) may be connected to the unwinder chucking part (130), and the roll core guide member (171) may be installed parallel to the transport rail (151). The roll core (111) of the traveling pouch roll (110) chuck-released from the unwinder chucking part (130) is recovered into the roll core recovery container (173) along the roll core guide member (171).

Figures 5 to 8 are diagrams for explaining operating states of a transport part in a pouch roll replacement system according to one example of the present invention.

Hereinafter, referring to Figures 5 to 8, a pouch roll position correction method using the pouch roll replacement system (100) will be described.

In the control part (190), the central axis height of the traveling pouch roll (110) chucked in the unwinder chucking part (130) is preset to the reference height (h₀). Here, the chucking height of the unwinder chucking part (130) is a fixed height, and the chucking height of the unwinder chucking part (130) is the same as the chucking height of the replacement chucking part (140). The chucking height of the unwinder chucking part (130) corresponds to the central axis height of the traveling pouch roll (110).

Referring to Figure 5, the replacement pouch roll (120) is supplied to the transport part (150). The transport part (150) is located at the transport standby position (P0). At the transport standby position, the replacement pouch roll (120) is in a state of being seated on the seating member (154).

Referring to Figure 6, at the transport standby position, the central axis height of the replacement pouch roll (120) is measured as the measurement height (h₁). The measuring part (160) measures the distance to the replacement pouch roll (120) at the transport standby position (P0). At the transport standby position (P0), the measuring part (160) and the transport part (150) are disposed up and down.

At this time, the control part (190) calculates the central axis height of the replacement pouch roll (120) as the measurement height (h₁), based on the measurement information.

Subsequently, the control part (190) may calculate a height correction value (Δh) of the replacement pouch roll (120) with respect to the traveling pouch roll (110). The height correction value (Δh) is the difference value between the reference height (h₀) and the measurement height (h₁).

In addition, the control part (190) controls the operation of the transport part (150) so that the central axis height of the replacement pouch roll (120) matches the reference height (h₀) based on the height correction value (Δh) information. At this instance, the height adjustment unit (155) adjusts the central axis height of the replacement pouch roll (120) by the height correction value (Δh). Through this process, the central axis height of the replacement pouch roll (120) seated on the transport part (150) is matched to the reference height (h₀).

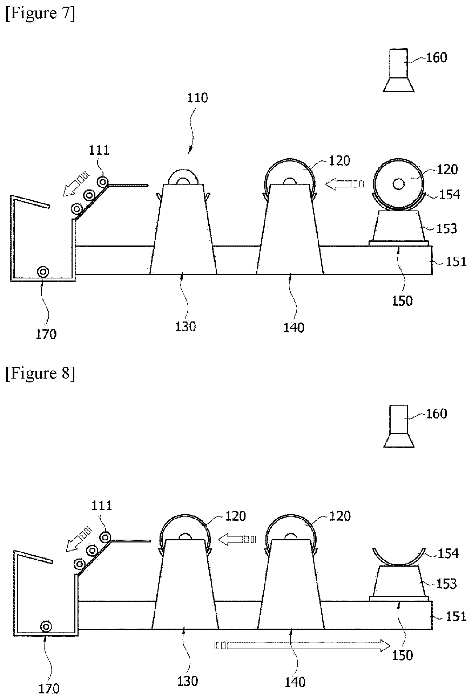

Referring to Figure 7, the replacement pouch roll (120) is transported at the transport standby position (P0) to the replacement chucking part (140) by the transport part (150). The replacement pouch roll (120) is chucked to the replacement chucking part (140) in a state of being seated on the transport part (150).

Upon replacement of the traveling pouch roll (110), the replacement pouch roll (120) chucked to the replacement chucking part (140) is chuck-released, and the replacement pouch roll (120) is separated from the replacement chucking part (140). The replacement pouch roll (120) separated from the replacement chucking part (140) is transported to the unwinder chucking part (130) by the transport part (150).

In addition, upon replacement of the traveling pouch roll (110), the unwinder chucking part (130) is operated to chuck-release the traveling pouch roll (110). The used traveling pouch roll (110) is recovered from the unwinder chucking part (130) to the roll core recovery part (170).

Referring to Figure 8, when the replacement pouch roll (120) is chucked to the unwinder chucking part (130), the transport part (150) is operated to return from the unwinder chucking part (130) to the transport standby position (P0).

### Industrial Applicability

According to the pouch roll replacement system according to one example of the present invention, and the pouch roll position correction method using the same, by measuring the roll diameter of the replacement pouch roll seated on the transport part before transporting the replacement pouch to the replacement chucking part, it is possible to adjust the central axis height of the replacement pouch roll seated on the transport part to the chucking heights of the replacement chucking part and the unwinder chucking part.

## Claims

1. A pouch roll replacement system (100) comprising:
a transport part (150) transporting a replacement pouch roll (120) and capable of adjusting the central axis height of the replacement pouch roll (120);
a replacement chucking part (140) provided to chuck the replacement pouch roll (120) transported through the transport part (150) and having a predetermined chucking height;
an unwinder chucking part (130) with a traveling pouch roll (110) installed;
a measuring part (160) measuring the distance to the replacement pouch roll (120) seated on the transport part (150) before transporting the replacement pouch roll (120) to the replacement chucking part (140); and
a control part (190) controlling the transport part (150) so that the central axis height of the replacement pouch roll (120) seated on the transport part (150) is adjusted based on the measurement information of the measuring part (160) and the chucking height of the replacement chucking part (140).

2. The pouch roll replacement system (100) according to claim 1, wherein
the control part (190) controls the operation of the transport part (150) so that the replacement pouch roll (120) is transported to the replacement chucking part (140) after adjusting the central axis height of the replacement pouch roll (120) seated on the transport part (150).

3. The pouch roll replacement system (100) according to claim 1, wherein
the control part (190) is provided so that it calculates the diameter of the replacement pouch roll (120) based on the measurement information, and calculates the difference between the chucking height of the replacement chucking part (140) and the center axis height of the replacement pouch roll (120) seated on the transport part (150) based on the diameter of the replacement pouch roll (120).

4. The pouch roll replacement system (100) according to claim 3, wherein
the control part (190) calculates the difference between the chucking height of the replacement chucking part (140) and the central axis height of the replacement pouch roll (120) seated on the transport part (150) as a height correction value, and controls the transport part (150) so that the central axis height of the replacement pouch roll (120) seated on the transport part (150) is adjusted by the height correction value.

5. The pouch roll replacement system (100) according to claim 3, wherein
the control part (190) adjusts the central axis height of the replacement pouch roll (120) seated on the transport part (150) so that the central axis height of the replacement pouch roll (120) seated on the transport part (150) matches the chucking height of the replacement chucking part (140).

6. The pouch roll replacement system (100) according to claim 1, wherein
the unwinder chucking part (130) has the same chucking height as that of the replacement chucking part (140), and
the transport part (150) is provided to transport the replacement pouch roll (120) from the replacement chucking part (140) to the unwinder chucking part (130).

7. The pouch roll replacement system (100) according to claim 6, wherein the transport part (150) comprises:
a transport rail (151) extending to guide the transport of the replacement pouch roll (120) through the replacement chucking part (140) to the unwinder chucking part (130);
a shuttle (153) including a seating member (154), on which the replacement pouch roll (120) is seated, and provided to be movable along the transport rail (151); and
a height adjustment unit (155) adjusting the height of the seating member (154).

8. The pouch roll replacement system (100) according to claim 7, wherein
the shuttle (153) is provided to be capable of reciprocating along the transport rail (151), and
the shuttle (153) is moved to the unwinder chucking part (130) when the traveling pouch roll (110) is replaced with the replacement pouch roll (120), and moves from the unwinder chucking part (130) to the measuring part (160) after the replacement pouch roll (120) is chucked to the unwinder chucking part (130).

9. The pouch roll replacement system (100) according to claim 7, wherein
the seating member (154) is curved to a predetermined curvature.

10. The pouch roll replacement system (100) according to claim 1, wherein
the measuring part (160) comprises a distance sensor measuring the distance from the replacement pouch roll (120) seated on the transport part (150).

11. The pouch roll replacement system (100) according to claim 10, wherein
the distance sensor is an ultrasonic sensor.

12. The pouch roll replacement system (100) according to claim 1, further comprising
a pouch connection part (180) gripping the end of the pouch (115, 125) wound around the replacement pouch roll (120) chucked to the replacement chucking part (140), and then transferring the end of the pouch (115, 125) toward the unwinder chucking part (130).

13. The pouch roll replacement system (100) according to claim 12, wherein the pouch connection part (180) comprises
a guide bar (181) extending from the upper part of the replacement chucking part (140) to the upper part of the unwinder chucking part (130), and
a gripper (183) installed to be movable along the guide bar (181) and holding the end of the pouch (115, 125) wound around the replacement pouch roll (120) to move from the replacement chucking part (140) toward the unwinder chucking part (130).

14. The pouch roll replacement system (100) according to claim 12, wherein
when the end of the pouch (115, 125) is gripped through the pouch connection part (180), the control part (190) chuck-releases the replacement pouch roll (120) from the replacement chucking part (140), and then transports the replacement pouch roll (120) to the unwinder chucking part (130) through the transport part (150).

15. The pouch roll replacement system (100) according to claim 1, further comprising
a roll core recovery part (170) recovering the roll core (111) of the traveling pouch roll (110) chuck-released from the unwinder chucking part (130).

## Patentansprüche

1. Beutelrollen-Austauschsystem (100), umfassend:
einen Transportteil (150), der eine Austauschbeutelrolle (120) transportiert und in der Lage ist, die Mittelachsenhöhe der Austauschbeutelrolle (120) einzustellen;
einen Austauscheinspannteil (140), der vorgesehen ist, um die Austauschbeutelrolle (120) einzuspannen, die durch den Transportteil (150) transportiert wird und eine vorbestimmte Einspannhöhe aufweist;
einen Abwickeleinspannteil (130), in dem eine sich bewegende Beutelrolle (110) installiert ist;
einen Messteil (160), der den Abstand zu der Austauschbeutelrolle (120) misst, die auf dem Transportteil (150) sitzt, bevor die Austauschbeutelrolle (120) zu dem Austauscheinspannteil (140) transportiert wird; und
einen Steuerteil (190), der den Transportteil (150) so steuert, dass die Mittelachsenhöhe der Austauschbeutelrolle (120), die auf dem Transportteil (150) sitzt, basierend auf den Messinformationen des Messteils (160) und der Einspannhöhe des Austauscheinspannteils (140) eingestellt wird.

2. Beutelrollen-Austauschsystem (100) nach Anspruch 1, wobei
der Steuerteil (190) den Betrieb des Transportteils (150) so steuert, dass die Austauschbeutelrolle (120) zu dem Austauscheinspannteil (140) transportiert wird, nachdem die Mittelachsenhöhe der Austauschbeutelrolle (120), die auf dem Transportteil (150) sitzt, eingestellt wurde.

3. Beutelrollen-Austauschsystem (100) nach Anspruch 1, wobei
der Steuerteil (190) so vorgesehen ist, dass er den Durchmesser der Austauschbeutelrolle (120) basierend auf den Messinformationen berechnet und die Differenz zwischen der Einspannhöhe des Austauscheinspannteils (140) und der Mittelachsenhöhe der Austauschbeutelrolle (120), die auf dem Transportteil (150) sitzt, basierend auf dem Durchmesser der Austauschbeutelrolle (120) berechnet.

4. Beutelrollen-Austauschsystem (100) nach Anspruch 3, wobei
der Steuerteil (190) die Differenz zwischen der Einspannhöhe des Austauscheinspannteils (140) und der Mittelachsenhöhe der Austauschbeutelrolle (120), die auf dem Transportteil (150) sitzt, als einen Höhenkorrekturwert berechnet und den Transportteil (150) so steuert, dass die Mittelachsenhöhe der Austauschbeutelrolle (120), die auf dem Transportteil (150) sitzt, durch den Höhenkorrekturwert eingestellt wird.

5. Beutelrollen-Austauschsystem (100) nach Anspruch 3, wobei
der Steuerteil (190) die Mittelachsenhöhe der Austauschbeutelrolle (120), die auf dem Transportteil (150) sitzt, so einstellt, dass die Mittelachsenhöhe der Austauschbeutelrolle (120), die auf dem Transportteil (150) sitzt, mit der Einspannhöhe des Austauscheinspannteils (140) übereinstimmt.

6. Beutelrollen-Austauschsystem (100) nach Anspruch 1, wobei
der Abwickeleinspannteil (130) die gleiche Einspannhöhe wie die des Austauscheinspannteils (140) aufweist, und
der Transportteil (150) vorgesehen ist, um die Austauschbeutelrolle (120) von dem Austauscheinspannteil (140) zu dem Abwickeleinspannteil (130) zu transportieren.

7. Beutelrollen-Austauschsystem (100) nach Anspruch 6, wobei der Transportteil (150) umfasst:
eine Transportschiene (151), die sich erstreckt, um den Transport der Austauschbeutelrolle (120) durch den Austauscheinspannteil (140) zu dem Abwickeleinspannteil (130) zu führen;
ein Schiffchen (153), das ein Sitzelement (154) umfasst, auf dem die Austauschbeutelrolle (120) sitzt, und vorgesehen ist, um entlang der Transportschiene (151) bewegbar zu sein; und
eine Höheneinstelleinheit (155), die die Höhe des Sitzelements (154) einstellt.

8. Beutelrollen-Austauschsystem (100) nach Anspruch 7, wobei
das Schiffchen (153) vorgesehen ist, um in der Lage zu sein, sich entlang der Transportschiene (151) hin- und herzubewegen, und
das Schiffchen (153) zu dem Abwickeleinspannteil (130) bewegt wird, wenn die sich bewegende Beutelrolle (110) durch die Austauschbeutelrolle (120) ausgetauscht wird, und sich von dem Abwickeleinspannteil (130) zu dem Messteil (160) bewegt, nachdem die Austauschbeutelrolle (120) an dem Abwickeleinspannteil (130) eingespannt ist.

9. Beutelrollen-Austauschsystem (100) nach Anspruch 7, wobei
das Sitzelement (154) zu einer vorbestimmten Krümmung gekrümmt ist.

10. Beutelrollen-Austauschsystem (100) nach Anspruch 1, wobei
der Messteil (160) einen Abstandssensor umfasst, der den Abstand von der Austauschbeutelrolle (120) misst, die auf dem Transportteil (150) sitzt.

11. Beutelrollen-Austauschsystem (100) nach Anspruch 10, wobei
der Abstandssensor ein Ultraschallsensor ist.

12. Beutelrollen-Austauschsystem (100) nach Anspruch 1, ferner umfassend
einen Beutelverbindungsteil (180), der das Ende des Beutels (115, 125) greift, der um die Austauschbeutelrolle (120) gewickelt ist, die an dem Austauscheinspannteil (140) eingespannt ist, und dann das Ende des Beutels (115, 125) zu dem Abwickeleinspannteil (130) überführt.

13. Beutelrollen-Austauschsystem (100) nach Anspruch 12, wobei der Beutelverbindungsteil (180) umfasst
eine Führungsstange (181), die sich von dem oberen Teil des Austauscheinspannteils (140) zu dem oberen Teil des Abwickeleinspannteils (130) erstreckt, und
einen Greifer (183), der installiert ist, um entlang der Führungsstange (181) bewegbar zu sein, und das Ende des Beutels (115, 125) hält, der um die Austauschbeutelrolle (120) gewickelt ist, um sich von dem Austauscheinspannteil (140) zu dem Abwickeleinspannteil (130) zu bewegen.

14. Beutelrollen-Austauschsystem (100) nach Anspruch 12, wobei
wenn das Ende des Beutels (115, 125) durch den Beutelverbindungsteil (180) gegriffen wird, der Steuerteil (190) die Austauschbeutelrolle (120) von dem Austauscheinspannteil (140) einspannt und dann die Austauschbeutelrolle (120) zu dem Abwickeleinspannteil (130) durch den Transportteil (150) transportiert.

15. Beutelrollen-Austauschsystem (100) nach Anspruch 1, ferner umfassend
einen Rollenkern-Rückgewinnungsteil (170), der den Rollenkern (111) der sich bewegenden Beutelrolle (110), die von dem Abwickeleinspannteil (130) eingespannt ist, zurückgewinnt.

## Revendications

1. Système de remplacement de rouleau de poches (100) comprenant :
une partie de transport (150) qui transporte un rouleau de poches de remplacement (120) et est apte à ajuster la hauteur d'axe central du rouleau de poches de remplacement (120) ;
une partie de serrage de remplacement (140) prévue pour serrer le rouleau de poches de remplacement (120) transporté à travers la partie de transport (150) et ayant une hauteur de serrage prédéterminée ;
une partie de serrage de dérouleur (130) avec un rouleau de poches en déplacement (110) qui est installé ;
une partie de mesurage (160) qui mesure la distance jusqu'au rouleau de poches de remplacement (120) assis sur la partie de transport (150) avant d'effectuer le transport du rouleau de poches de remplacement (120) jusqu'à la partie de serrage de remplacement (140) ; et
une partie de commande (190) qui commande la partie de transport (150) de sorte que la hauteur d'axe central du rouleau de poches de remplacement (120) assis sur la partie de transport (150) soit ajustée sur la base des informations de mesure de la partie de mesurage (160) et de la hauteur de serrage de la partie de serrage de remplacement (140).

2. Système de remplacement de rouleau de poches (100) selon la revendication 1, dans lequel
la partie de commande (190) commande le fonctionnement de la partie de transport (150) de sorte que le rouleau de poches de remplacement (120) soit transporté jusqu'à la partie de serrage de remplacement (140) après l'ajustement de la hauteur d'axe central du rouleau de poches de remplacement (120) assis sur la partie de transport (150).

3. Système de remplacement de rouleau de poches (100) selon la revendication 1, dans lequel
la partie de commande (190) est prévue de sorte qu'elle calcule le diamètre du rouleau de poches de remplacement (120) sur la base des informations de mesure, et calcule la différence entre la hauteur de serrage de la partie de serrage de remplacement (140) et la hauteur d'axe central du rouleau de poches de remplacement (120) assis sur la partie de transport (150) sur la base du diamètre du rouleau de poches de remplacement (120).

4. Système de remplacement de rouleau de poches (100) selon la revendication 3, dans lequel
la partie de commande (190) calcule la différence entre la hauteur de serrage de la partie de serrage de remplacement (140) et la hauteur d'axe central du rouleau de poches de remplacement (120) assis sur la partie de transport (150) en tant que valeur de correction de la hauteur, et commande la partie de transport (150) de sorte que la hauteur d'axe central du rouleau de poches de remplacement (120) assis sur la partie de transport (150) soit ajustée selon la valeur de correction de la hauteur.

5. Système de remplacement de rouleau de poches (100) selon la revendication 3, dans lequel
la partie de commande (190) ajuste la hauteur d'axe central du rouleau de poches de remplacement (120) assis sur la partie de transport (150) de sorte que la hauteur d'axe central du rouleau de poches de remplacement (120) assis sur la partie de transport (150) concorde avec la hauteur de serrage de la partie de serrage de remplacement (140).

6. Système de remplacement de rouleau de poches (100) selon la revendication 1, dans lequel
la partie de serrage de dérouleur (130) a la même hauteur de serrage que celle de la partie de serrage de remplacement (140), et
la partie de transport (150) est prévue pour transporter le rouleau de poches de remplacement (120) à partir de la partie de serrage de remplacement (140) jusqu'à la partie de serrage de dérouleur (130).

7. Système de remplacement de rouleau de poches (100) selon la revendication 6, dans lequel la partie de transport (150) comprend :
un rail de transport (151) qui s'étend de façon à guider le transport du rouleau de poches de remplacement (120) à travers la partie de serrage de remplacement (140) jusqu'à la partie de serrage de dérouleur (130) ;
une navette (153) incluant un élément d'assise (154), sur lequel le rouleau de poches de remplacement (120) est assis, et prévue pour être mobile le long du rail de transport (151) ; et
une unité d'ajustement de hauteur (155) qui ajuste la hauteur de l'élément d'assise (154).

8. Système de remplacement de rouleau de poches (100) selon la revendication 7, dans lequel
la navette (153) est prévue pour être apte à effectuer un mouvement de va-et-vient le long du rail de transport (151), et
la navette (153) est déplacée jusqu'à la partie de serrage de dérouleur (130) lorsque le rouleau de poches en déplacement (110) est remplacé par le rouleau de poches de remplacement (120), et se déplace à partir de la partie de serrage de dérouleur (130) jusqu'à la partie de mesurage (160) une fois que le rouleau de poches de remplacement (120) est serré sur la partie de serrage de dérouleur (130).

9. Système de remplacement de rouleau de poches (100) selon la revendication 7, dans lequel
l'élément d'assise (154) est incurvé suivant une courbure prédéterminée.

10. Système de remplacement de rouleau de poches (100) selon la revendication 1, dans lequel
la partie de mesurage (160) comprend un capteur de distance qui mesure la distance à partir du rouleau de poches de remplacement (120) assis sur la partie de transport (150).

11. Système de remplacement de rouleau de poches (100) selon la revendication 10, dans lequel
le capteur de distance est un capteur ultrasonique.

12. Système de remplacement de rouleau de poches (100) selon la revendication 1, comprenant en outre
une partie de raccordement de poches (180) qui agrippe l'extrémité de la poche (115, 125) enroulée autour du rouleau de poches de remplacement (120) serré sur la partie de serrage de remplacement (140), et puis transfère l'extrémité de la poche (115, 125) vers la partie de serrage de dérouleur (130).

13. Système de remplacement de rouleau de poches (100) selon la revendication 12, dans lequel la partie de raccordement de poches (180) comprend
une barre de guidage (181) qui s'étend à partir de la partie supérieure de la partie de serrage de remplacement (140) jusqu'à la partie supérieure de la partie de serrage de dérouleur (130), et
un dispositif de préhension (183) installé pour être apte à bouger le long de la barre de guidage (181) et qui retient l'extrémité de la poche (115, 125) enroulée autour du rouleau de poches de remplacement (120) afin de déplacer la partie de serrage de remplacement (140) vers la partie de serrage de dérouleur (130).

14. Système de remplacement de rouleau de poches (100) selon la revendication 12, dans lequel
lorsque l'extrémité de la poche (115, 125) est agrippée à travers la partie de raccordement de poches (180), la partie de commande (190) libère le serrage du rouleau de poches de remplacement (120) au niveau de la partie de serrage de remplacement (140), et puis transporte le rouleau de poches de remplacement (120) jusqu'à la partie de serrage de dérouleur (130) à travers la partie de transport (150).

15. Système de remplacement de rouleau de poches (100) selon la revendication 1, comprenant en outre
une partie de récupération du noyau de rouleau (170) qui récupère le noyau de rouleau (111) du rouleau de poches en déplacement (110) suite à la libération du serrage au niveau de la partie de serrage de dérouleur (130).
